# FASCICULE DE BREVET EUROPEEN

(11) **EP 3 112 260 B1**
(45) Date de publication et mention de la délivrance du brevet: **11.03.2020**
(21) Numéro de dépôt: 16173849.7
(22) Date de dépôt: 10.06.2016
(51) Int. Cl.: B64C 13/50, B64C 13/04

(54) **PROCÉDÉ DE COMMANDE DES MOYENS AÉRODYNAMIQUES D'UN AÉRONEF, SYSTÈME DE COMMANDE ASSOCIÉ ET AÉRONEF ÉQUIPÉ D'UN TEL SYSTÈME DE COMMANDE**
VERFAHREN ZUR STEUERUNG VON AERODYNAMISCHEN MITTELN EINES LUFTFAHRZEUGS, ENTSPRECHENDES STEUERVERFAHREN UND MIT EINEM SOLCHEN STEUERVERFAHREN AUSGERÜSTETES LUFTFAHRZEUG
A METHOD OF CONTROLLING AERODYNAMIC MEANS OF AN AIRCRAFT, AN ASSOCIATED CONTROL SYSTEM, AND AN AIRCRAFT PROVIDED WITH SUCH A CONTROL SYSTEM

(30) Priorité: 30.06.2015 FR 1501375
(43) Date de publication de la demande: 04.01.2017
(73) Titulaire: Airbus Helicopters, 13725 Marignane Cedex (FR)
(72) Inventeur: OTT, Adrien, 13300 SALON DE PROVENCE (FR); BYZERY, Roméo, 13003 MARSEILLE (FR); VALLART, Jean-Baptiste, 13100 AIX EN PROVENCE (FR)
(74) Mandataire: GPI & Associés

(56) Documents cités:
- EP-A1- 2 857 312
- EP-A2- 2 518 578
- WO-A1-2014/199212
- US-A- 5 404 305
- US-A1- 2012 053 735

## Description

La présente invention se rapporte au domaine du pilotage d'un aéronef tel un avion ou un giravion au moyen d'au moins deux organes de commandes de vol.

Ainsi, pour la suite de la présente demande, on entend désigner par organe de commande tout dispositif de commande apte à être manœuvré par un pilote ou automatiquement que ce soit dans un cockpit de pilotage ou à l'extérieur de l'aéronef lorsque celui-ci n'embarque pas de pilote. De tels organes de commande peuvent ainsi se présenter sous diverses formes et notamment, d'une part, celle d'un levier, d'un manche ou d'un "mini-manche", également désigné en langue anglaise par le terme de "joystick", ou encore d'autre part, celle d'un palonnier.

Ces organes de commande permettent alors de déplacer des moyens aérodynamiques par rapport à un flux d'air incident relativement à un fuselage de l'aéronef. De tels moyens aérodynamiques peuvent alors, dans le cas d'un avion, consister soit en des volets, des ailerons ou des spoilers d'aile, soit en une gouverne de direction d'une dérive ou d'une gouverne de profondeur.

Dans le cas d'un giravion, de tels moyens aérodynamiques peuvent cependant correspondre à un angle de pas collectif ou cyclique des pales d'un rotor principal et d'un angle de pas collectif des pales notamment d'un rotor arrière, par exemple.

L'invention concerne plus particulièrement un procédé de commande des moyens aérodynamiques d'un aéronef, le système de commande associé et l'aéronef équipé de ce système de commande.

De manière générale, les aéronefs pilotés par deux pilotes comportent des organes de commande de vol conventionnels couplés mécaniquement entre eux et permettant de déplacer individuellement ou simultanément une liaison mécanique permettant de modifier le positionnement de moyens aérodynamiques par rapport à un flux d'air incident.

Il existe par ailleurs également des organes de commande de vol électriques actionnés manuellement par les pilotes et permettant en outre de générer un ordre de commande sous la forme d'un signal électrique représentatif d'une position de chacun des organes de commande.

De plus, avec l'apparition des organes de commande de vol électriques, il n'est plus nécessaire de coupler mécaniquement deux organes de commande permettant à chacun des pilotes de piloter manuellement l'aéronef simultanément ou alternativement. En particulier, ce couplage mécanique est inutile pour les mini-manches permettant, avec un très faible débattement de l'organe de commande, un contrôle notamment en tangage et en roulis de l'aéronef. Cette suppression du couplage mécanique est avantageuse en ce qu'elle permet d'améliorer l'ergonomie du poste de pilotage d'un tel type d'aéronef à deux pilotes.

Ainsi, et tel que notamment décrit dans le document WO 2014/199212, il est connu d'utiliser des organes de commande de vol électriques non couplés mécaniquement entre eux. Cependant dans ce cas, le mode de fonctionnement dual dans lequel chaque organe de commande peut commander les moyens aérodynamiques présente par défaut une logique de sommation algébrique des ordres de commande générés simultanément par les deux organes de commande.

Ainsi, la consigne de commande résultante peut s'annuler si les deux organes de commande sont manipulés dans des directions opposées. Une telle consigne de commande nulle n'engendre alors pas de modification dans la trajectoire de l'aéronef et peut se révéler dangereuse pour le pilotage de certains aéronefs nécessitant une rapidité de contrôle supérieure. En effet, par exemple dans le cas des giravions, il faut par défaut que l'un des deux pilotes puisse agir rapidement pour corriger une trajectoire. Ce pilote doit ainsi disposer de l'entière autorité de commande permettant de déplacer les moyens aérodynamiques sur une amplitude totale de déplacement.

Dans le cas où la logique de sommation est conservée, l'organe de commande disposant d'une priorité sur le deuxième ne possède alors pas une autorité totale sur les moyens aérodynamiques de l'aéronef. Autrement dit, même si un tel bouton de priorité permet de rendre inopérant l'un des deux organes de commande, il ne permet pas à l'organe de commande prioritaire de commander les moyens aérodynamiques de l'aéronef sur une amplitude totale de déplacement,

Par ailleurs, les documents EP 2 857 312 et US 5 404 305 décrivent quant à eux le principe général d'un système de commande permettant le pilotage d'un aéronef par deux pilotes manœuvrant respectivement chacun un organe de commande.

Ces deux documents concernent cependant uniquement un mode dit "instruction" correspondant à une logique de commande par sommation des consignes de commande issues des deux organes de commande comme décrit dans le document WO 2014/199212.

Enfin, il est également connu des systèmes de commande, tels que décrits par les documents US 2012/053735 et EP 2 518 578, dans lesquels un unique pilote d'aéronef peut prendre le contrôle des moyens aérodynamiques de l'aéronef lorsque le pilote automatique de l'aéronef est activé. Dans ce cas, les moyens aérodynamiques de l'aéronef peuvent être pilotés soit par un pilote automatique et soit par deux organes de commande manœuvrés par deux pilotes avec une logique de sommation comme décrit par le document WO 2014/199212.

Cependant, dans ce cas les procédés et systèmes décrits ne concernent pas le contrôle exclusif des commandes d'un aéronef par deux organes de commande destinés à être manœuvrés respectivement chacun par une personne physique telle un pilote d'aéronef.

En outre, le document WO 2014/199212 décrit effectivement un mode de fonctionnement dans lequel un seul des organes de commande peut être activé, selon le préambule de la revendication 1. Dans ce cas des boutons de priorité permettent de rendre active l'une des deux consignes de commande issue de l'un des deux organes de commande de manière permanente.

La présente invention a alors pour objet de proposer un procédé de commande, un système de commande et un aéronef permettant de s'affranchir des limitations mentionnées ci-dessus. Le but de l'invention est donc de garantir par défaut, lors d'un mode de fonctionnement dual, l'exclusivité des commandes de l'aéronef à l'un des pilotes pour lui permettre de piloter manuellement la trajectoire de l'aéronef, et en conséquence de disposer de la pleine autorité de commande en cas de correction urgente de trajectoire.

L'invention concerne donc un procédé de commande pour commander des moyens aérodynamiques d'un aéronef à commandes de vol désaccouplées mécaniquement permettant de réaliser un pilotage de l'aéronef par au moins deux pilotes selon la revendication 1.

Avec un tel procédé de commande en mode de fonctionnement dual, les deux pilotes ne peuvent pas piloter simultanément l'aéronef. Chaque pilote peut en revanche piloter alternativement et exclusivement les moyens aérodynamiques avec une autorité totale correspondant à une amplitude totale de déplacement de chaque moyen aérodynamique.

On entend par "alternativement" le fait que le premier pilote peut prendre les commandes en activant l'organe de commande, dès lors organe activé, l'organe de commande du deuxième pilote devenant simultanément l'organe désactivé. Ainsi, sauf solutions particulières présentées ultérieurement, le deuxième pilote peut alors lui-même reprendre les commandes et son organe de commande devient un organe activé, l'organe de commande du premier pilote étant alors l'organe désactivé.

Une telle exclusivité d'autorité totale des deux organes de commande est par conséquent distincte d'une autorité par sommation des organes de commande habituellement utilisée dans les procédés de commande d'aéronef dont le pilotage s'effectue avec deux organes de commande désaccouplés mécaniquement.

De plus, il est à noter que les au moins deux organes de commande destinés à être manœuvrés respectivement chacun par l'un des au moins deux pilotes excluent de fait un dispositif de type pilote automatique de l'aéronef. En effet, de tels dispositifs de type pilote automatique ne constituent pas des organes de commande destinés à être manœuvrés manuellement par une personne physique telle un pilote d'aéronef.

Par ailleurs, afin de savoir quel est le pilote qui dispose d'un organe de commande activé, le procédé de commande peut générer des signaux sensoriels d'information aptes à restituer une information visuelle et/ou sonore. De tels signaux sensoriels peuvent ainsi consister en des indications visuelles sur un écran, des voyants dédiés, des alarmes sonores ou encore des messages vocaux explicites indiquant aux pilotes quel est l'organe de commande activé.

En outre et préférablement comme explicité ci-dessus, dès qu'un pilote active son organe de commande, initialement désactivé, cela désactive automatiquement l'autre organe de commande initialement activé. Par ailleurs, une telle activation manuelle d'un organe désactivé peut être réalisée de diverses manières selon différents exemples de réalisation tels que décrit ci-après.

Ainsi selon un premier exemple de réalisation, l'activation manuelle de l'organe désactivé peut être réalisée par un pilote en charge de l'organe désactivé en appuyant sur un bouton d'activation.

Bien entendu, un tel bouton d'activation peut par exemple être agencé directement sur l'organe de commande initialement désactivé. Une pression sur ce bouton d'activation peut alors être réalisée aisément par exemple avec le pouce ou l'index du pilote.

Selon un deuxième exemple de réalisation, l'activation manuelle de l'organe désactivé peut être réalisée par un pilote en charge de l'organe désactivé en déplaçant cet organe désactivé.

Dans ce cas, l'activation manuelle peut être réalisée automatiquement et directement en déplaçant l'organe de commande initialement désactivé par rapport à son support ou plus généralement à un châssis de l'aéronef.

Selon un troisième exemple de réalisation, l'activation manuelle de l'organe désactivé peut être réalisée de deux manières différentes par un pilote en charge de l'organe désactivé. L'activation manuelle de l'organe désactivé peut alors être réalisée soit en appuyant sur un bouton d'activation, conformément au premier exemple de réalisation, soit en déplaçant cet organe désactivé, conformément au deuxième exemple de réalisation.

Ainsi, le pilote en charge de l'organe désactivé peut choisir le moyen lui permettant d'activer manuellement son organe désactivé.

En pratique, l'organe désactivé peut être maintenu en position par une force de maintien. Une telle force de maintien de l'organe désactivé fournit alors un signal sensoriel immédiatement perceptible permettant au pilote de cet organe d'identifier celui-ci comme étant dans l'état désactivé.

Avantageusement, l'organe désactivé peut être maintenu en position dans une position centrale, appelée position neutre, correspondant au milieu de la course totale de mouvement, lorsqu'il est activé, de l'organe désactivé.

En d'autres termes, lorsqu'un organe de commande est désactivé, il peut être remis dans la position neutre avant d'être maintenu dans cette position. Pour placer l'organe de commande en position neutre, plusieurs solutions sont envisagées.

Selon une première solution, le pilote peut exercer une force manuelle sur l'organe de commande en direction de la position neutre. Dans ce cas, l'organe de commande peut être de type passif et tel qu'il soit non asservi en position.

Selon une seconde solution, l'organe de commande peut revenir automatiquement dans la position neutre grâce à des moyens de rappels élastiques dans le cas d'un organe de commande de type passif ou grâce à des moyens motorisés dans le cas d'un organe de commande de type actif et tel qu'il soit asservi en position par les moyens motorisés.

Par ailleurs, une telle force de maintien en position de l'organe désactivé peut être manuellement surpassable ou non par un pilote. Il en résulte alors deux modes de réalisations distincts l'un de l'autre.

Ainsi, selon une première variante, la force de maintien peut être supérieure à une valeur de seuil et permettre d'empêcher tout actionnement manuel de l'organe désactivé par un pilote de l'aéronef.

De cette manière, le maintien en position de l'organe désactivé est permanent et le pilote ne peut actionner manuellement l'organe désactivé sans l'avoir préalablement activé par exemple au moyen d'une activation manuelle consistant en un bouton d'activation.

Selon une seconde variante, la force de maintien peut être inférieure à une valeur de seuil et apte à être surpassée par un actionnement manuel de l'organe désactivé par un pilote de l'aéronef.

Ainsi, le maintien en position de l'organe désactivé est temporaire. Dans ce cas, le pilote peut actionner manuellement l'organe désactivé directement et sans l'avoir préalablement activé.

Dans ce cas, le surpassement de la force maintien de l'organe désactivé peut provoquer l'activation manuelle de l'organe désactivé.

En outre, une telle activation manuelle de l'organe désactivé est donc automatique et intuitive dès le surpassement de la force de verrouillage réalisée par le pilote qui souhaite reprendre les commandes de l'aéronef.

Avantageusement, à chaque nouvelle activation manuelle d'un organe nouvellement activé mais initialement désactivé, on peut générer une interdiction d'une réactivation, au moins pendant une durée prédéterminée, pour un organe nouvellement désactivé mais initialement activé.

Autrement dit, une telle interdiction permet d'inhiber automatiquement et temporairement la réactivation immédiate d'un organe de commande nouvellement désactivé. Une telle interdiction d'une réactivation permet donc de rendre plus sûre la mise en œuvre du mode de fonctionnement dual du procédé de commande.

En pratique, l'interdiction d'une réactivation, au moins pendant une durée prédéterminée, pour un organe nouvellement désactivé mais initialement activé peut être sélectionnée par l'un des pilotes de l'aéronef au moyen d'un premier élément de sélection actionnable uniquement par ce pilote.

Dans ce cas, le pilote en charge de l'actionnement du premier élément de sélection peut sélectionner l'interdiction d'une réactivation immédiate de l'organe qui vient juste d'être désactivé. Ainsi lorsque cette interdiction d'une réactivation est sélectionnée, le pilote en charge de l'organe de commande initialement activé, nouvellement désactivé peut être obligé de patienter pendant la durée prédéterminée avant de pouvoir réactiver son organe de commande. En pratique, cette durée prédéterminée peut être comprise entre une seconde et trois secondes si cette durée échoit automatiquement ou être une durée dont l'échéance est de l'initiative du pilote à l'origine de l'interdiction de la réactivation immédiate.

Par ailleurs, l'activation manuelle de l'organe désactivé et l'interdiction d'une réactivation immédiate peuvent être réalisées simultanément par un moyen unique.

En d'autres termes, l'interdiction d'une réactivation immédiate peut être opérée concomitamment à l'activation d'un organe désactivé. Le moyen unique peut donc consister soit en un bouton d'activation, soit plus directement en une déflexion volontaire et manuelle de l'organe de commande initialement maintenu en position car étant désactivé.

Par ailleurs, lorsqu'une interdiction d'une réactivation immédiate est opérée et que l'activation manuelle de l'organe désactivé peut être réalisée soit en appuyant sur un bouton d'activation, soit en déplaçant cet organe désactivé, il est alors envisagé que l'interdiction d'une réactivation immédiate ne s'applique que dans le cas d'une activation manuelle de l'organe désactivé par un déplacement de celui-ci.

Dans ce cas, seule l'activation manuelle de l'organe nouvellement désactivé réalisée en appuyant sur le bouton d'activation permet alors d'inhiber l'interdiction d'une réactivation immédiate de cet organe nouvellement désactivé et par conséquent de réactiver immédiatement un tel organe nouvellement désactivé.

La logique opérationnelle selon l'invention comporte au moins un mode de fonctionnement mono-pilote dans lequel :
- un seul des au moins deux organes de commande, dit organe activé, permet de commander exclusivement, et ce sur une amplitude totale de déplacement, les moyens aérodynamiques, l'autre organe de commande, dit organe désactivé, étant alors inopérant sur les moyens aérodynamiques, et
- l'organe activé reste toujours activé et l'organe désactivé reste toujours désactivé.

De cette manière, le procédé dispose également d'un mode de fonctionnement mono-pilote dans lequel il n'est pas possible pour un pilote disposant d'un organe de commande désactivé de prendre les commandes de l'aéronef. C'est le pilote disposant de l'organe de commande activé qui peut générer seul les ordres de commande des moyens aérodynamiques de l'aéronef.

La logique opérationnelle du procédé peut par ailleurs permettre de sélectionner le mode de fonctionnement choisi par le ou les pilotes avant toute mission de l'aéronef et ce mode de fonctionnement peut ensuite sous certaines conditions être modifié en vol.

En pratique, la logique opérationnelle selon l'invention comporte donc le mode de fonctionnement dual et peut comporter deux modes de fonctionnement mono-pilote correspondant à un mode mono-pilote gauche dans lequel l'organe activé est celui agencé à gauche d'un cockpit de l'aéronef et à un mode mono-pilote droit dans lequel l'organe activé est celui agencé à droite d'un cockpit de l'aéronef. L'aéronef peut alors comporter un commutateur permettant de sélectionner manuellement l'un ou l'autre des deux modes de fonctionnement mono-pilote. De plus, dans ce cas, l'activation manuelle de l'organe désactivé du mode de fonctionnement dual est réalisée par un autre moyen distinct du commutateur permettant de sélectionner le mode de fonctionnement mono-pilote de la logique opérationnelle.

Autrement dit, la logique opérationnelle peut permettre à un seul des pilotes de prendre les commandes de l'aéronef en activant l'organe de commande gauche ou l'organe de commande droit de l'aéronef. Cette sélection de l'organe de commande à activer peut être réalisée par le pilote avant toute mission de l'aéronef et peut éventuellement, sous certaines conditions, être modifiée en vol.

Par ailleurs, un tel commutateur permettant de sélectionner l'un ou l'autre des deux modes de fonctionnement mono-pilote ne peut en aucun cas réaliser l'activation manuelle d'un organe désactivé relative au mode de fonctionnement dual qui est quant à elle réalisée soit au moyen d'un bouton d'activation soit au moyen d'un déplacement ou d'une déflexion de directe de l'organe désactivé.

Avantageusement, le commutateur peut aussi permettre de sélectionner le mode de fonctionnement dual.

De cette façon, avec un seul commutateur le ou les pilotes peuvent choisir de donner ou non des droits de pilotage aux différents pilotes de l'aéronef. Un tel commutateur peut alors consister en un interrupteur à trois positions stables tel un bouton rotatif notamment, avec par exemple une première position correspondant au mode de fonctionnement mono-pilote gauche, une deuxième position centrale correspondant au mode de fonctionnement dual et une troisième position correspondant au mode de fonctionnement mono-pilote droit.

Avantageusement, le procédé de commande peut comporter une autre logique, dite logique instruction, qui, lorsqu'elle est activée par un second élément de sélection, désactive la logique opérationnelle. Dans la logique instruction, les au moins deux organes de commande peuvent alors être activés simultanément pour commander par sommation l'amplitude totale de déplacement des moyens aérodynamiques.

Dans ce cas et selon une seconde réalisation, il n'y a alors plus d'exclusivité entre les au moins deux organes de commande de l'aéronef qui sont activés simultanément. Chacun des organes de commande peut donc être utilisé simultanément pour fournir un ordre de commande à un système de commande. Le système de commande génère alors la consigne de commande des moyens aérodynamiques en fonction d'une sommation des ordres de commande représentatifs des positions courantes des au moins deux organes de commande.

La présente invention a donc aussi pour objet un système de commande pour commander des moyens aérodynamiques d'un aéronef à commandes de vol désaccouplées mécaniquement permettant de réaliser un pilotage de l'aéronef par au moins deux pilotes, un tel système de commande comportant au moins deux organes de commande destinés à être manœuvrés respectivement chacun par l'un des au moins deux pilotes et permettant de générer chacun un ordre de commande. Ces ordres de commande sont alors transmis à une unité de traitement du système de commande pour générer des consignes de commande d'au moins un actionneur réalisant le déplacement des moyens aérodynamiques par rapport à un flux d'air incident.

Un tel système de commande est remarquable en ce qu'il met en œuvre le procédé de commande précité.

Autrement dit, un tel système de commande peut comporter au moins une unité de traitement telle un calculateur, pour générer la consigne de commande des moyens aérodynamiques de l'aéronef en fonction des ordres de commande générés par les au moins deux organes de commande.

Par ailleurs dans la logique opérationnelle et en mode de fonctionnement dual, une telle unité de traitement permet également d'activer et de désactiver alternativement les différents organes de commande.

Enfin, l'invention concerne également un aéronef à commandes de vol désaccouplées mécaniquement comportant un système de commande pour commander des moyens aérodynamiques et permettant de réaliser un pilotage de l'aéronef. En outre, un tel système de commande comporte au moins deux organes de commande permettant de générer chacun un ordre de commande. Comme déjà évoqué, ces ordres de commande sont ensuite transmis à une unité de traitement du système de commande pour générer des consignes de commande d'au moins un actionneur réalisant un déplacement des moyens aérodynamiques par rapport à un flux d'air incident.

Un tel aéronef se caractérise en ce que le système de commande est choisi conformément au système de commande tel que précédemment décrit.

Ainsi, un tel aéronef comporte un système de commande pour commander des moyens aérodynamiques d'un aéronef, le système de commande comportant au moins deux organes de commande destinés à être manœuvrés respectivement chacun par l'un des au moins deux pilotes et une unité de traitement mettant en œuvre un mode de fonctionnement dual où chaque organe de commande peut commander les moyens aérodynamiques et dans lequel :
- un seul des au moins deux organes de commande, dit organe activé, commande exclusivement, et ce sur une amplitude totale de déplacement, les moyens aérodynamiques, l'autre organe de commande, dit organe désactivé, étant alors temporairement inopérant sur les moyens aérodynamiques, et
- chacun des deux organes de commande est alternativement activé pour commander exclusivement les moyens aérodynamiques.

En pratique, un tel aéronef peut comporter des moyens de liaison de données pour au moins recevoir des consignes de commande issues d'un organe de commande additionnel extérieur à l'aéronef. L'organe de commande additionnel permet ainsi de télé piloter à distance l'un des deux organes de commande de l'aéronef.

Dans ce cas, un seul pilote peut être aux commandes dans l'aéronef. L'organe de commande additionnel est alors agencé par exemple dans un poste de pilotage au sol et les moyens de liaison de données permettent alors d'implémenter la logique opérationnelle et son mode dual de façon distribuée entre le poste de pilotage de l'aéronef auquel le pilote est aux commandes et le poste de pilotage au sol.

L'invention et ses avantages apparaîtront avec plus de détails dans le cadre de la description qui suit avec des exemples de réalisation donnés à titre indicatif, mais non limitatif, dans lesquels :
- la figure 1 est une vue de coté d'un aéronef conforme à l'invention permettant la mise en œuvre des premier et second modes de réalisation du procédé de commande,
- la figure 2 est une représentation schématique d'un système de commande conforme à l'invention permettant également la mise en œuvre des premier et second modes de réalisation du procédé de commande,
- la figure 3 représente un logigramme illustrant la première réalisation d'un procédé de commande conforme à l'invention,
- la figure 4 représente un logigramme illustrant la seconde réalisation d'un procédé de commande conforme à l'invention,
- la figure 5 est une vue en perspective représentative du premier exemple d'organes de commande d'un aéronef, conformément à l'invention, et
- la figure 6 est une vue en perspective représentative du second exemple d'organes de commande d'un aéronef, conformément à l'invention.

Les éléments présents dans plusieurs figures distinctes sont affectés d'une seule et même référence.

Comme déjà évoqué, l'invention concerne un aéronef à commandes de vol électriques permettant de réaliser son pilotage. Un tel aéronef est par ailleurs adapté pour permettre à deux pilotes de le piloter au moyen d'au moins deux organes de commande de vol électriques non couplés mécaniquement.

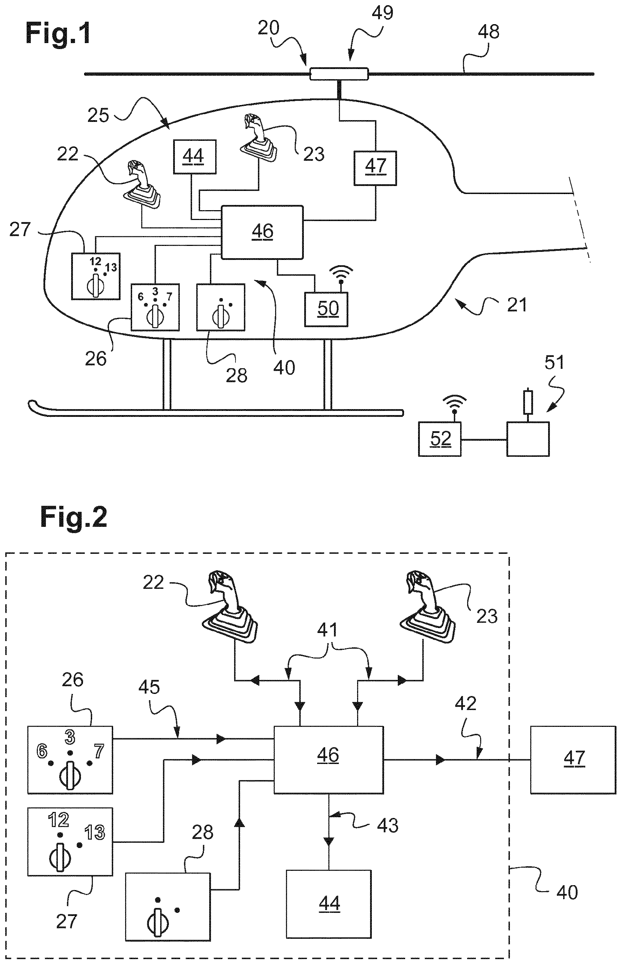

Ainsi et telle que représentée à la figure 1 l'invention se rapporte à un aéronef 21 ici représenté par exemple sous la forme d'un giravion.

Un tel aéronef 21 comporte ainsi un système de commande 40 incluant une unité de traitement 46 pour générer des consignes de commande électriques, optiques ou numériques et les transmettre à au moins un actionneur 47 réalisant un déplacement de moyens aérodynamiques 20 par rapport à un flux d'air incident.

Dans le cas d'espèce où l'aéronef 21 est un giravion, l'actionneur 47 permet alors de modifier le pas collectif et/ou le pas cyclique des pales 48 d'un rotor principal 49 d'un giravion. Cependant, l'invention ne se limite pas à cette réalisation donnée à titre indicatif et peut aussi se rapporter à un actionneur piloté par un palonnier pour modifier le pas collectif et/ou le pas cyclique des pales d'un rotor arrière de giravion.

Par ailleurs, dans le cockpit 25 de pilotage de l'aéronef 21 sont agencés au moins deux organes de commande 22, 23 pouvant être activés exclusivement l'un après l'autre pour piloter l'aéronef 21. Chaque organe de commande 22, 23, lorsqu'il est activé, possède alors une autorité totale sur l'amplitude de déplacement des moyens aérodynamiques 20.

Par ailleurs et tels que représentés à la figure 1, les organes de commande 22, 23 peuvent notamment se présenter sous la forme de mini-manches aptes à modifier par exemple le pas cyclique et/ou le pas collectif des pales 48 du rotor principal 49 de l'aéronef 21.

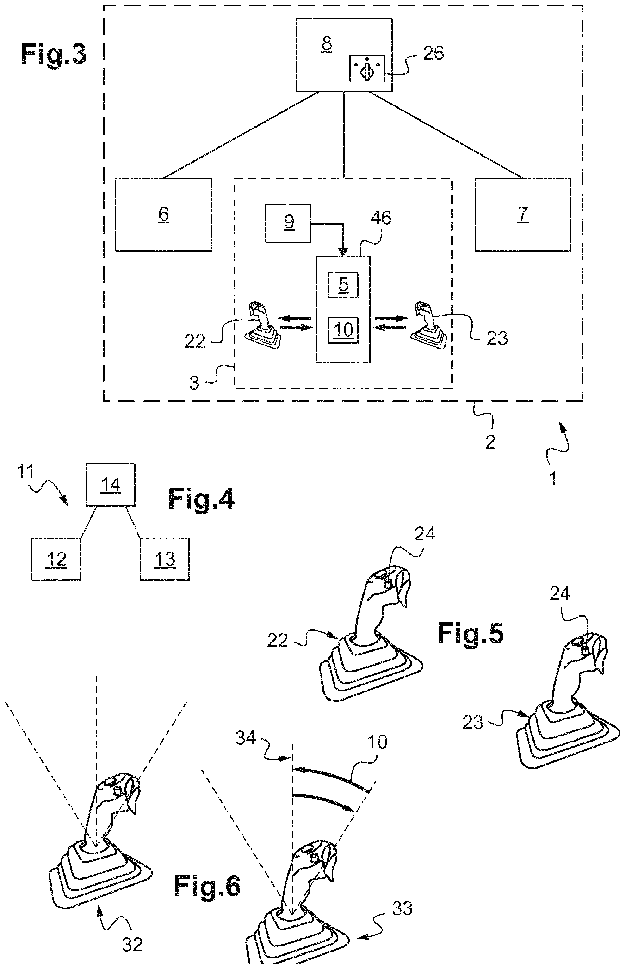

Dans le cockpit 25 est également agencé un commutateur 26 permettant à au moins un des pilotes de l'aéronef 21 de sélectionner trois modes de fonctionnement 3, 6, 7 d'une logique opérationnelle 2, 12. Une telle logique opérationnelle 2 et ses différents modes de fonctionnement 3, 6, 7 correspondant à la première réalisation du procédé de commande 1 sera décrit ci-après à la figure 3. De même, le procédé de commande 11 selon la seconde réalisation comporte à la fois une logique opérationnelle 12 et une logique instruction 13 et sera décrit plus en détail à la figure 4.

En outre, un premier élément de sélection 28 peut également être installé dans le cockpit 25 de l'aéronef 21 pour permettre à un seul des pilotes de l'aéronef 21 d'autoriser ou d'interdire une réactivation, au moins pendant une durée prédéterminée, pour un organe 22 nouvellement désactivé mais initialement activé.

Selon la seconde réalisation déjà évoqué, le cockpit 25 de l'aéronef 21 comporte également un second élément de sélection 27 permettant à au moins l'un des deux pilotes de sélectionner exclusivement la logique opérationnelle 12 ou la logique instruction 13.

Au surplus, le cockpit 25 de l'aéronef 21 peut également être équipé de moyens d'information 44 visuels ou sonores visant à générer une information et la transmettre aux pilotes de l'aéronef 21 pour leur permettre de connaître l'organe de commande 22 ou 23 qui est activé exclusivement.

Par ailleurs, un tel aéronef 21 peut comporter des moyens de liaison de données 50 permettant notamment de recevoir des consignes de commande issues d'un organe de commande additionnel 51 extérieur audit aéronef 21.

Cet organe de commande additionnel 51 est ainsi relié à un organe de transmission 52 pour transmettre, depuis un poste de pilotage déporté de l'aéronef 21, des instructions de pilotage au système de commande 40 de l'aéronef 21. Par suite, l'organe de commande additionnel 51 permet de télé piloter à distance l'un des deux organes de commande 22, 23 de l'aéronef 21.

Ainsi, l'organe de commande additionnel 51 peut participer à la mise en œuvre de la logique opérationnelle 2, 12 et plus particulièrement au mode de fonctionnement dual 3 de pilotage de l'aéronef 21 lorsqu'un seul pilote est présent dans le cockpit 25 de l'aéronef 21.

Telle que représentée à la figure 2, l'invention se rapporte également au système de commande 40 pour commander les moyens aérodynamiques 20 d'un aéronef 21. Un tel système de commande 40 comporte ainsi au moins deux organes de commande 22, 23 générant électriquement chacun des ordres de commande 41 et les transmettant à une unité de traitement 46.

Un tel système de commande 40 génère alors des consignes de commande 42 d'au moins un actionneur 47 pour permettre de piloter l'aéronef 21 en déplaçant les moyens aérodynamiques 20.

Par ailleurs, un tel système de commande 40 comporte un commutateur 26 permettant à au moins un des pilotes de l'aéronef 21 de sélectionner l'un au moins des modes de fonctionnement 3, 6 ou 7 d'une logique opérationnelle 2, 12 telle que décrite ci-après. La position centrale du commutateur 26 correspond à un mode de fonctionnement dual 3, la position gauche du commutateur 26 correspond à un mode de fonctionnement mono-pilote gauche 6 et la position droite du commutateur 26 correspond à un mode de fonctionnement mono-pilote droit 7. Le commutateur 26 donne ainsi des instructions 45 à l'unité de traitement 46, ces instructions 45 étant représentatives du mode de fonctionnement sélectionné par au moins un des pilotes.

De plus, un tel système de commande 40 peut également comporter des moyens d'information 44 générant des signaux sensoriels d'information aptes à restituer une information visuelle et/ou sonore. De tels signaux sensoriels peuvent ainsi consister en des indications visuelles sur un écran, des voyants dédiés, des alarmes sonores ou encore des messages vocaux explicites indiquant aux pilotes quel est l'organe de commande activé.

Pour ce faire, l'unité de traitement 46 génère alors aussi des instructions sensorielles 43 à destination des moyens d'information 44 pour permettre aux pilotes d'identifier visuellement ou auditivement quel organe de commande 22 ou 23 est activé.

Telle que représentée aux figures 3 et 4, l'invention se rapporte également à un procédé de commande 1, 11 pouvant mettre en œuvre différentes logiques et différents modes de fonctionnement.

Ainsi, tel que représenté à la figure 3 et selon un premier mode de réalisation, le procédé de commande 1 comporte une logique opérationnelle 2 comportant notamment un mode de fonctionnement dual 3 dans lequel chaque organe de commande 22, 23 peut commander les moyens aérodynamiques 20 de l'aéronef 21. Une telle logique opérationnelle 2 peut également comporter deux modes de fonctionnement mono-pilote 6, 7 dans lesquels un seul des organes de commande 22 ou 23 peut commander les moyens aérodynamiques 20 de l'aéronef 21 sur une amplitude totale de déplacement.

Les modes de fonctionnement mono-pilote 6, 7 peuvent alors consister en un mode de fonctionnement mono-pilote gauche 6 dans lequel l'organe de commande gauche 22 possède une autorité totale sur la commande des moyens aérodynamiques 20 et, par analogie, un mode de fonctionnement mono-pilote droit 7 dans lequel l'organe de commande droit 23 possède une autorité totale sur la commande des moyens aérodynamiques 20.

Tel que représenté à la figure 3, le procédé de commande 1 comporte en outre une étape de sélection 8 permettant à au moins un pilote de sélectionner manuellement le mode de fonctionnement dual 3 ou les modes de fonctionnement mono-pilote 6, 7 à l'aide du commutateur 26.

Une fois le mode de fonctionnement dual 3 sélectionné, un seul des deux organes de commande, dit organe activé 22, commande exclusivement, et ce avec une autorité totale, les moyens aérodynamiques 20, l'autre organe de commande, dit organe désactivé 23, étant alors temporairement inopérant sur les moyens aérodynamiques 20.

De plus dans ce mode de fonctionnement dual 3, lorsqu'une activation manuelle 9 d'un organe désactivé 23 est détectée, elle est alors transmise à l'unité de traitement 46 et le procédé de commande 1 peut provoquer automatiquement une désactivation de l'organe activé 22, l'organe de commande désactivé 23 initialement étant nouvellement activé pour commander, via l'actionneur 47, les moyens aérodynamiques 20 sur l'amplitude totale de déplacement.

Par ailleurs, dans le mode de fonctionnement dual 3, l'unité de traitement 46 peut générer une interdiction d'une réactivation 5, au moins pendant une durée prédéterminée, pour un organe 22 nouvellement désactivé mais initialement activé.

Une telle interdiction d'une réactivation 5 permet alors d'inhiber temporairement une réactivation instantanée d'un organe de commande nouvellement désactivé.

Tel que représenté à la figure 4 et selon la seconde réalisation, le procédé de commande 11 peut comporter, en plus d'une logique opérationnelle 12 équivalente à la logique opérationnelle 2 telle que décrite à la figure 3, une logique instruction 13 additionnelle activable exclusivement. Ainsi, lorsque la logique instruction 13 est activée, elle inhibe la logique opérationnelle 12.

Contrairement à la logique opérationnelle 12, une telle logique instruction 13 permet d'activer simultanément les deux organes de commande et de générer une consigne de commande des moyens aérodynamiques 20 qui est fonction d'une sommation des ordres de commande 41 issus de chaque organe de commande 22, 23.

Par ailleurs, le procédé de commande 11 comporte également une étape de sélection 14 distincte de l'étape de sélection 8 telle que décrite à la figure 3 pour sélectionner le mode de fonctionnement de la logique opérationnelle 2. Une telle étape de sélection 13 consiste alors à sélectionner exclusivement la logique opérationnelle 12 ou la logique instruction 13.

Tel que représenté à la figure 5 selon un premier exemple de réalisation, un aéronef 21, mettant en œuvre un procédé 1, 11 conforme à l'invention, comporte un organe activé 22 permettant de commander exclusivement les moyens aérodynamiques 20 de l'aéronef 21 et un organe désactivé 23 inopérant sur les moyens aérodynamiques. Tels que représentés, les organes de commande 22, 23 se présentent sous la forme de mini-manches et peuvent, selon un premier exemple de réalisation, comporter un bouton d'activation 24 permettant à chacun des pilotes de l'aéronef 21 de générer l'activation manuelle 9 telle que présentée à la figure 3.

Selon un deuxième exemple de réalisation tel que représenté à la figure 6, l'organe désactivé 33 peut générer directement l'activation manuelle 9 décrite précédemment, uniquement par la déflexion ou le déplacement d'un élément mobile par rapport à un support fixe solidaire du châssis de l'aéronef.

Par ailleurs, l'organe désactivé 33 peut être maintenu en position par une force de maintien 10 dans une position neutre 34.

Le mode de fonctionnement dual 3 peut ainsi générer une force de maintien 10 pour maintenir en position l'organe désactivé 33. Une telle force de maintien 10 permet de fournir une information sensitive directe à un pilote visant à lui indiquer que son organe de commande est désactivé.

De plus, pour pouvoir générer l'activation manuelle 9 de l'organe désactivé 33, le pilote peut ainsi réaliser un actionnement manuel de l'organe désactivé 33 agencé en position neutre 34.

Une telle force de maintien 10 peut selon une première variante être supérieure à une valeur de seuil empêchant le pilote d'actionner manuellement l'organe désactivé 33. Par ailleurs et selon une deuxième variante, la force de maintien 10 peut être inférieure à une valeur de seuil permettant au pilote de la surpasser et d'actionner l'organe désactivé 33.

En outre lorsqu'un organe de commande est désactivé il peut, selon une première solution correspondant par exemple à un organe de commande passif, être ramené manuellement par le pilote ou automatiquement par des moyens de rappel élastique en position neutre 34. Par ailleurs selon une seconde solution correspondant par exemple à un organe de commande actif, l'organe de commande nouvellement désactivé peut revenir automatiquement par des moyens motorisés dans la position neutre 34.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention telle que définie par les revendications.

De plus, il est envisageable de disposer d'un équipage composé d'un pilote dans l'aéronef et d'un pilote au sol, et d'une liaison de données entre le poste de pilotage au sol et l'aéronef. Dans ce cas, le poste de pilotage non utilisé de l'aéronef est configuré dans un mode télé piloté. Les deux pilotes aux commandes de l'aéronef sont donc, pour l'un présent à bord de l'aéronef et, pour l'autre, le pilote au sol disposant d'un organe de pilotage à distance. Alors les mêmes fonctionnalités de la logique opérationnelle, en particulier son mode de fonctionnement dual peuvent s'appliquer.

Il ressort de ce qui précède qu'un procédé de commande conforme à l'invention des moyens aérodynamiques d'un aéronef, un système de commande associé et un aéronef équipé d'un tel système de commande présentent de nombreux avantages, et permettent notamment de :
- conserver, en mode de fonctionnement dual, un pilotage exclusif similaire à celui d'un mode de fonctionnement mono-pilote,
- faciliter la coordination entre les pilotes et la répartition de la tâche de pilotage,
- garantir une reprise en main immédiate en cas d'urgence par un surpassement d'une force de verrouillage de l'organe de commande,
- gérer les conflits d'utilisation simultanée des organes de commande par une inhibition temporaire de la réactivation d'un organe de commande nouvellement désactivé et,
- utiliser une logique instruction additive inhibant alors la logique opérationnelle.

## Revendications

1. Procédé de commande (1, 11) pour commander des moyens aérodynamiques (20) d'un aéronef (21) à commandes de vol désaccouplées mécaniquement permettant de réaliser un pilotage dudit aéronef (21) par au moins deux pilotes, ledit aéronef (21) comportant au moins deux organes de commande (22, 32 - 23, 33) destinés à être manœuvrés respectivement chacun par l'un desdits au moins deux pilotes et permettant de générer chacun des ordres de commande (41) pour réaliser un déplacement desdits moyens aérodynamiques (20) par rapport à un flux d'air incident, ledit procédé de commande (1, 11) comportant une logique de pilotage, dite logique opérationnelle (2, 12), ladite logique opérationnelle (2, 12) comportant un mode de fonctionnement dual (3) où chaque organe de commande (22, 32 - 23, 33) peut commander lesdits moyens aérodynamiques (20)
, dans ledit mode de fonctionnement dual (3), un seul desdits au moins deux organes de commande, dit organe activé (22, 32), commande exclusivement, et ce sur une amplitude totale de déplacement, lesdits moyens aérodynamiques (20), l'autre organe de commande, dit organe désactivé (23, 33), étant alors temporairement inopérant sur lesdits moyens aérodynamiques (20), et
dans ledit mode de fonctionnement dual (3), on peut générer une activation manuelle (9) dudit organe désactivé (23, 33) provoquant automatiquement une désactivation dudit organe activé (22, 32), l'organe désactivé (23, 33) initialement étant nouvellement activé pour commander lesdits moyens aérodynamiques (20) sur ladite amplitude totale de déplacement, ladite logique opérationnelle (2) comportant au moins un mode de fonctionnement mono-pilote (6, 7) dans lequel :
• un seul desdits au moins deux organes de commande, dit organe activé (22, 32), permet de commander exclusivement, et ce sur une amplitude totale de déplacement, lesdits moyens aérodynamiques (20), l'autre organe de commande, dit organe désactivé (23, 33), étant alors inopérant sur lesdits moyens aérodynamiques (20), et
• l'organe activé (22, 32) reste toujours activé et l'organe désactivé (23, 33) reste toujours désactivé,
ladite logique opérationnelle (2) comportant deux modes de fonctionnement mono-pilote (6, 7) correspondant à un mode mono-pilote gauche (6) dans lequel l'organe activé (22, 32) est celui agencé à gauche d'un cockpit (25) dudit aéronef (21) et à un mode mono-pilote droit (7) dans lequel l'organe activé (23, 33) est celui agencé à droite d'un cockpit (25) dudit aéronef (21),
**caractérisé en ce que** ledit aéronef (21) comporte un commutateur (26) permettant de sélectionner manuellement le mode de fonctionnement dual (3) et l'un ou l'autre desdits deux modes de fonctionnement mono-pilote (6, 7), et **en ce que**, dans le mode de fonctionnement dual, ladite activation manuelle (9) dudit organe désactivé (23, 33) est réalisée par un autre moyen distinct dudit commutateur (26).

2. Procédé selon la revendication 1,
**caractérisé en ce que** ladite activation manuelle (9) dudit organe désactivé (23) est réalisée par un pilote en charge de l'organe désactivé (23) en appuyant sur un bouton d'activation (24).

3. Procédé selon l'une des revendications 1 ou 2,
**caractérisé en ce que** ladite activation manuelle (9) dudit organe désactivé (33) est réalisée par un pilote en charge de l'organe désactivé (33) en déplaçant ledit organe désactivé (33).

4. Procédé selon l'une quelconque des revendications 1 à 3,
**caractérisé en ce que** ledit organe désactivé (23, 33) est maintenu en position par une force de maintien (10).

5. Procédé selon la revendication 4,
**caractérisé en ce que** ledit organe désactivé (23, 33) est maintenu en position dans une position centrale (34), appelée position neutre, correspondant au milieu de la course totale de mouvement, lorsqu'il est activé, dudit organe désactivé (23, 33).

6. Procédé selon l'une quelconque des revendications 1 à 2,
**caractérisé en ce que** ledit organe désactivé (23, 33) est maintenu en position par une force de maintien (10), ladite force de maintien (10) étant supérieure à une valeur de seuil et permettant d'empêcher tout actionnement manuel dudit organe désactivé (23) par un pilote dudit aéronef (21).

7. Procédé selon l'une quelconque des revendications 4 à 5,
**caractérisé en ce que** ladite force de maintien (10) est inférieure à une valeur de seuil et est apte à être surpassée par un actionnement manuel dudit organe désactivé (33) par un pilote dudit aéronef (21).

8. Procédé selon les revendications 3 et 7
**caractérisé en ce qu'**un surpassement de ladite force de maintien dudit organe désactivé (33) provoque ladite activation manuelle (9) dudit organe désactivé (33) par le déplacement dudit organe désactivé (33).

9. Procédé selon l'une quelconque des revendications 1 à 8, **caractérisé en ce qu'**à chaque nouvelle activation manuelle (9) d'un organe (23, 33) nouvellement activé mais initialement désactivé, on génère une interdiction d'une réactivation (5), au moins pendant une durée prédéterminée, pour un organe (22, 32) nouvellement désactivé mais initialement activé.

10. Procédé selon la revendication 9,
**caractérisé en ce que** ladite interdiction d'une réactivation (5), au moins pendant une durée prédéterminée, pour un organe (22, 32) nouvellement désactivé mais initialement activé est sélectionnée par l'un des pilotes dudit aéronef (21) au moyen d'un premier élément de sélection (28) actionnable uniquement par ledit pilote.

11. Procédé selon l'une quelconque des revendications 1 à 10,
**caractérisé en ce que** ledit procédé de commande (11) comporte une autre logique de pilotage, dite logique instruction (13), qui, lorsqu'elle est activée par un second élément de sélection (27), désactive ladite logique opérationnelle (12), et **en ce que**, dans ladite logique instruction (13), lesdits au moins deux organes de commande (22, 32 - 23, 33) sont activés simultanément pour commander par sommation ladite amplitude totale de déplacement desdits moyens aérodynamiques (20).

12. Système de commande (40) pour commander des moyens aérodynamiques (20) d'un aéronef (21) à commandes de vol désaccouplées mécaniquement permettant de réaliser un pilotage dudit aéronef (21) par au moins deux pilotes, ledit système de commande (40) comportant au moins deux organes de commande (22, 32 - 23, 33) destinés à être manœuvrés respectivement chacun par l'un desdits au moins deux pilotes et permettant de générer chacun des ordres de commande (41), lesdits ordres de commande (41) étant transmis à une unité de traitement (46) du système de commande (40) pour générer des consignes de commande (42) d'au moins un actionneur (47) réalisant un déplacement desdits moyens aérodynamiques (20) par rapport à un flux d'air incident
**caractérisé en ce que** ledit système de commande (40) met en œuvre un procédé de commande selon l'une des revendications 1 à 11.

13. Aéronef (21) à commandes de vol désaccouplées mécaniquement comportant un système de commande (40) pour commander des moyens aérodynamiques (20) et permettre de réaliser un pilotage dudit aéronef (21) par au moins deux pilotes, ledit système de commande (40) comportant au moins deux organes de commande (22, 32 - 23, 33) destinés à être manœuvrés respectivement chacun par l'un desdits au moins deux pilotes et permettant de générer chacun un ordre de commande (41), lesdits ordres de commande (41) étant transmis à une unité de traitement (46) du système de commande (40) pour générer des consignes de commande (42) d'au moins un actionneur (47) réalisant un déplacement desdits moyens aérodynamiques (20) par rapport à un flux d'air incident
**caractérisé en ce que** ledit système de commande (40) est choisi conformément à un système de commande (40) selon la revendication 12.

14. Aéronef selon la revendication 13,
**caractérisé en ce que** ledit aéronef (21) comporte des moyens de liaison de données (50) pour au moins recevoir des consignes de commande issues d'un organe de commande additionnel (51) extérieur audit aéronef (21), ledit organe de commande additionnel (51) permettant de télé piloter à distance l'un desdits au moins deux organes de commande (22, 32 - 23, 33) de l'aéronef (21).

## Patentansprüche

1. Steuerverfahren (1, 11) zur Steuerung von aerodynamischen Mitteln (20) eines Luftfahrzeugs (21) mit mechanisch entkoppelten Flugsteuerungen, die eine Lenkung des Luftfahrzeugs (21) durch mindestens zwei Piloten ermöglichen, wobei das Luftfahrzeug (21) mindestens zwei Steuerorgane (22, 32- 23, 33) umfasst, die jeweils dazu bestimmt sind, von einem der mindestens zwei Piloten bedient zu werden, und die es jeweils ermöglichen, Steuerbefehle (41) zu erzeugen, um eine Verstellung der aerodynamischen Mittel (20) in Bezug auf eine einfallende Luftströmung zu bewirken, wobei das Steuerverfahren (1, 11) eine Lenklogik, als Betriebslogik (2, 12) bezeichnet, umfasst, wobei die besagte Betriebslogik (2, 12) eine duale Betriebsart (3) umfasst, in der jedes Steuerorgan (22, 32 - 23, 33) die besagten aerodynamischen Mittel (20) steuern kann, wobei in der besagten dualen Betriebsart (3) nur eines der mindestens zwei Steuerorgane, als aktiviertes Organ (22, 32) bezeichnet, die aerodynamischen Mittel (20) allein, und zwar über eine Gesamtverstellamplitude, steuert, während das andere Steuerorgan, als deaktiviertes Organ (23, 33) bezeichnet, dann vorübergehend auf die aerodynamischen Mittel (20) nicht wirksam ist, und
in der dualen Betriebsart (3) eine manuelle Aktivierung (9) des deaktivierten Elements (23, 33) erzeugt werden kann, die automatisch eine Deaktivierung des aktivierten Elements (22, 32) bewirkt, wobei das ursprünglich deaktivierte Element (23, 33) von neuem aktiviert wird, um die aerodynamischen Mittel (20) über die Gesamtverstellamplitude zu steuern, wobei die Betriebslogik (2) mindestens eine Ein-Pilot-Betriebsart (6, 7) umfasst, in der:
- ein einziges der mindestens zwei Steuerorgane, das so genannte aktivierte Organ (22, 32), es ermöglicht, die genannten aerodynamischen Mittel (20) allein, und zwar über eine Gesamtverstellamplitude, zu steuern, wobei das andere Steuerorgan, als deaktiviertes Organ (23, 33) bezeichnet, dann auf die genannten aerodynamischen Mittel (20) nicht mehr wirkt, und
- das aktivierte Organ (22, 32) immer aktiviert und das deaktivierte Organ (23, 33) immer deaktiviert bleibt,
wobei die Betriebslogik (2) zwei Ein-Pilot-Betriebsarten (6, 7) umfasst, die einer linken Ein-Pilot-Betriebsart (6), in der das aktivierte Element (22, 32) dasjenige ist, das links in einem Cockpit (25) des Luftfahrzeugs (21) angeordnet ist, und einer rechten Ein-Pilot-Betriebsart (7) entsprechen, in der das aktivierte Element (23, 33) dasjenige ist, das rechts in einem Cockpit (25) des Luftfahrzeugs (21) angeordnet ist,
**dadurch gekennzeichnet, dass** das Luftfahrzeug (21) einen Schalter (26) aufweist, der die manuelle Auswahl der dualen Betriebsart (3) und der einen oder der anderen der beiden Ein-Pilot-Betriebsarten (6, 7) ermöglicht, und dass in der dualen Betriebsart die manuelle Aktivierung (9) des deaktivierten Organs (23, 33) durch ein anderes, von dem Schalter (26) verschiedenes Mittel erfolgt.

2. Verfahren nach Anspruch 1,
**dadurch gekennzeichnet, dass** die manuelle Aktivierung (9) des deaktivierten Organs (23) von einem für das deaktivierte Organ (23) zuständigen Piloten durch Drücken einer Aktivierungstaste (24) durchgeführt wird.

3. Verfahren nach einem der Ansprüche 1 oder 2,
**dadurch gekennzeichnet, dass** die manuelle Aktivierung (9) des deaktivierten Organs (33) von einem für das deaktivierte Organ (33) zuständigen Piloten durch Verstellen des deaktivierten Organs (33) durchgeführt wird.

4. Verfahren nach einem der Ansprüche 1 bis 3,
**dadurch gekennzeichnet, dass** das deaktivierte Organ (23, 33) durch eine Haltekraft (10) in Position gehalten wird.

5. Verfahren nach Anspruch 4,
**dadurch gekennzeichnet, dass** das deaktivierte Organ (23, 33) in einer zentralen Position (34), als neutrale Position bezeichnet, die der Mitte des gesamten Bewegungshubs des deaktivierten Organs (23, 33) im aktivierten Zustand entspricht, in Position gehalten wird.

6. Verfahren nach einem der Ansprüche 1 bis 2,
**dadurch gekennzeichnet, dass** das deaktivierte Element (23, 33) durch eine Haltekraft (10) in Position gehalten wird, wobei die Haltekraft (10) größer als ein Schwellenwert ist und es ermöglicht, jede manuelle Betätigung des deaktivierten Elements (23) durch einen Piloten des Flugzeugs (21) zu verhindern.

7. Verfahren nach einem der Ansprüche 4 bis 5,
**dadurch gekennzeichnet, dass** die Haltekraft (10) unter einem Schwellenwert liegt und durch manuelle Betätigung des deaktivierten Elements (33) durch einen Piloten des Flugzeugs (21) überwindbar ist.

8. Verfahren nach den Ansprüchen 3 und 7,
**dadurch gekennzeichnet, dass** eine Überwindung der Haltekraft des deaktivierten Elements (33) die manuelle Aktivierung (9) des deaktivierten Elements (33) durch Verstellung des deaktivierten Elements (33) bewirkt.

9. Verfahren nach einem der Ansprüche 1 bis 8,
**dadurch gekennzeichnet, dass** jedes Mal, wenn ein neu aktiviertes, aber anfänglich deaktiviertes Organ (23, 33) manuell aktiviert (9) wird, eine Reaktivierungssperre (5) für ein neu deaktiviertes, aber anfänglich aktiviertes Organ (22, 32) zumindest für eine vorgegebene Zeitdauer erzeugt wird.

10. Verfahren nach Anspruch 9,
**dadurch gekennzeichnet, dass** die Reaktivierungssperre (5) für ein neu deaktiviertes, aber anfänglich aktiviertes Organ (22, 32) zumindest für eine vorgegebene Zeitdauer von einem der Piloten des Flugzeugs (21) mittels eines ersten Auswahlelements (28) ausgewählt wird, das allein von diesem Piloten betätigbar ist.

11. Verfahren nach einem der Ansprüche 1 bis 10,
**dadurch gekennzeichnet, dass** das Steuerverfahren (11) eine andere Lenklogik, als Befehlslogik (13) bezeichnet, umfasst, die, wenn sie durch ein zweites Auswahlelement (27) aktiviert wird, die Betriebslogik (12) deaktiviert, und dass in der Befehlslogik (13) die mindestens zwei Steuerorgane (22, 32 - 23, 33) gleichzeitig aktiviert werden, um die Gesamtamplitude der Verstellung der aerodynamischen Mittel (20) durch Summierung zu steuern.

12. Steuersystem (40) zur Steuerung von aerodynamischen Mitteln (20) eines Luftfahrzeugs (21) mit mechanisch entkoppelten Flugsteuerungen, die eine Lenkung des Luftfahrzeugs (21) durch mindestens zwei Piloten ermöglichen, wobei das Steuersystem (40) mindestens zwei Steuerorgane (22, 32 - 23, 33) umfasst, die jeweils dazu bestimmt sind, von einem der mindestens zwei Piloten bedient zu werden, und die es jeweils ermöglichen, Steuerbefehle (41) zu erzeugen, wobei die Steuerbefehle (41) an eine Verarbeitungseinheit (46) des Steuersystems (40) übertragen werden, um Steuervorgaben (42) für mindestens ein Stellglied (47) zu erzeugen, das eine Verstellung der aerodynamischen Mittel (20) in Bezug auf einen einfallenden Luftstrom durchführt, **dadurch gekennzeichnet, dass** das Steuersystem (40) ein Steuerverfahren gemäß einem der Ansprüche 1 bis 11 implementiert.

13. Luftfahrzeug (21) mit mechanisch entkoppelten Flugsteuerungen, das ein Steuersystem (40) zur Steuerung von aerodynamischen Mitteln (20) umfasst und es ermöglicht, das Luftfahrzeug (21) durch mindestens zwei Piloten zu steuern, wobei das Steuersystem (40) mindestens zwei Steuerorgane (22, 32 - 23) umfasst, 33), die jeweils dazu bestimmt sind, von einem der mindestens zwei Piloten betätigt zu werden, und die es jeweils ermöglichen, einen Steuerbefehl (41) zu erzeugen, wobei die Steuerbefehle (41) an eine Verarbeitungseinheit (46) des Steuersystems (40) übertragen werden, um Steuervorgaben (42) für mindestens ein Stellglied (47) zu erzeugen, das eine Verschiebung der aerodynamischen Mittel (20) in Bezug auf einen einfallenden Luftstrom bewirkt,
**dadurch gekennzeichnet, dass** das Steuersystem (40) gemäß einem Steuersystem (40) nach Anspruch 12 ausgewählt ist

14. Luftfahrzeug nach Anspruch 13,
**dadurch gekennzeichnet, dass** das Luftfahrzeug (21) Datenverbindungsmittel (50) umfasst, um zumindest Steuervorgaben von einem zusätzlichen Steuerorgan (51) außerhalb des Luftfahrzeugs (21) zu empfangen, wobei das zusätzliche Steuerorgan (51) es ermöglicht, eines der mindestens zwei Steuerorgane (22, 32 - 23, 33) des Luftfahrzeugs (21) fernzusteuern.

## Claims

1. Control method (1, 11) for controlling aerodynamic means (20) of an aircraft (21) with mechanically decoupled flight control means allowing the aircraft (21) to be controlled by at least two pilots, the aircraft (21) comprising at least two control members (22, 32- 23, 33) which are each intended to be manoeuvred by one of the at least two pilots, respectively, and which each enable control instructions (41) to be generated in order to carry out a movement of the aerodynamic means (20) relative to an incident air flow, the control method (1, 11) comprising a control logic, referred to as the operational logic (2, 12), the operational logic (2, 12) comprising a dual operating mode (3) where each control member (22, 32- 23, 33) can control the aerodynamic means (20),
in the dual operating mode (3) only one of the at least two control members, referred to as the activated member (22, 32), controls exclusively, over an entire movement range, the aerodynamic means (20), the other control member, referred to as the deactivated member (23, 33) being temporarily inoperative on the aerodynamic means (20), and,
in the dual operating mode (3), it is possible to generate a manual activation (9) of the deactivated member (23, 33) which automatically brings about a deactivation of the activated member (22, 32), the initially deactivated member (23, 33) being newly activated in order to control the aerodynamic means (20) over the entire movement range, the operational logic (2) comprising at least one single-pilot operating mode (6, 7), in which:
• only one of the at least two control members, referred to as the activated member (22, 32), enables the aerodynamic means (20) to be controlled exclusively over an entire movement range, the other control member, referred to as the deactivated member (23, 33) being inoperative on the aerodynamic means (20), and
• the activated member (22, 32) always remains activated and the deactivated member (23, 33) always remains deactivated,
the operational logic (2) comprising two single-pilot operating modes (6, 7) which correspond to a left single-pilot mode (6) in which the activated member (22, 32) is the one which is arranged on the left of a cockpit (25) of the aircraft (21) and a right single-pilot mode (7) in which the activated member (23, 33) is the one which is arranged on the right of a cockpit (25) of the aircraft (21),
**characterised in that** the aircraft (21) comprises a commutator (26) which enables the dual operating mode (3) and one or other of the two single-pilot operating modes (6, 7) to be selected manually, and **in that**, in the dual operating mode, the manual activation (9) of the deactivated member (22, 33) is produced by another means separate from the commutator (26) .

2. Method according to claim 1, **characterised in that** the manual activation (9) of the deactivated member (23) is produced by a pilot in charge of the deactivated member (23) by pressing on an activation button (24).

3. Method according to either claim 1 or 2,
**characterised in that** the manual activation (9) of the deactivated member (33) is produced by a pilot in charge of the deactivated member (33) by moving the deactivated member (33) .

4. Method according to any one of claims 1 to 3,
**characterised in that** the deactivated member (23, 33) is fixed in position by a retention force (10).

5. Method according to claim 4, **characterised in that** the deactivated member (23, 33) is fixed in position in a central position (34), referred to as the neutral position, corresponding to the centre of the total movement travel, when it is activated, of the deactivated member (23, 33).

6. Method according to either claim 1 or 2,
**characterised in that** the deactivated member (23, 33) is fixed in position by a retention force (10), the retention force (10) being greater than a threshold value and enabling any manual activation of the deactivated member (23) by a pilot of the aircraft (21) to be prevented.

7. Method according to either claim 4 or 5,
**characterised in that** the retention force (10) is lower than a threshold value and is capable of being exceeded by a manual activation of the deactivated member (33) by a pilot of the aircraft (21).

8. Method according to claims 3 and 7,
**characterised in that** exceeding the retention force of the deactivation member (33) brings about the manual activation (9) of the deactivated member (33) by the movement of the deactivated member (33).

9. Method according to any one of claims 1 to 8,
**characterised in that** with each new manual activation (9) of a member (23, 33) which has been newly activated, but which was initially deactivated, a reactivation (5) is prevented, at least for a predetermined period of time, for a member (22, 32) which has been newly deactivated but which was initially activated.

10. Method according to claim 9, **characterised in that** the prevention of a reactivation (5), at least for a predetermined period of time, for a member (22, 32) which has been newly deactivated but which was initially activated is selected by one of the pilots of the aircraft (21) using a first selection element (28) which can be activated only by said pilot.

11. Method according to any one of claims 1 to 10,
**characterised in that** the control method (11) comprises another control logic, referred to as an instruction logic (13), which, when it is activated by a second selection element (27), deactivates the operational logic (12) and **in that**, in the instruction logic (13), the at least two control members (22, 32 - 23, 33) are activated simultaneously in order to control by means of summation the entire movement range of the aerodynamic means (20).

12. Control system (40) for controlling aerodynamic means (20) of an aircraft (21) with mechanically decoupled flight control means which enable the aircraft (21) to be controlled by at least two pilots, the control system (40) comprising at least two control members (22, 32 - 23, 33) which are each intended to be manoeuvred by one of the at least two pilots, respectively, and which each enable control instructions (41) to be generated, the control instructions (41) being transmitted to a processing unit (46) of the control system (40) in order to generate control instructions (42) of at least one actuator (47) which brings about a movement of the aerodynamic means (20) relative to an incident air flow, **characterised in that** the control system (40) implements a control method according to any one of claims 1 to 11.

13. Aircraft (21) with mechanically decoupled flight control means comprising a control system (40) in order to control aerodynamic means (20) and enable the aircraft (21) to be controlled by at least two pilots, the control system (40) comprising at least two control members (22, 32 - 23, 33) which are each intended to be manoeuvred by one of the at least two pilots, respectively, and which each enable a control instruction (41) to be generated, the control instructions (41) being transmitted to a processing unit (46) of the control system (40) in order to generate control instructions (42) of at least one actuator (47) which brings about a movement of the aerodynamic means (20) relative to an incident air flow,
**characterised in that** the control system (40) is selected in accordance with a control system (40) according to claim 12.

14. Aircraft according to claim 13,
**characterised in that** the aircraft (21) comprises data connection means (50) in order to at least receive control instructions from an additional control member (51) external with respect to the aircraft (21), the additional control member (51) enabling one of the at least two control members (22, 32 - 33, 33) of the aircraft (21) to be controlled remotely.
